# EUROPEAN PATENT SPECIFICATION

(11) **EP 3 304 679 B1**
(45) Date of publication and mention of the grant of the patent: **07.04.2021**
(21) Application number: 16804241.4
(22) Date of filing: 31.05.2016
(51) Int. Cl.: H02J 7/00, H02J 7/35, H02J 7/02, B65D 88/74, F25D 11/00, H02S 10/40, H02J 7/14, B60P 1/20, H02J 7/04, B65D 88/14, H02J 7/34, H02S 40/34, B60P 3/20

(54) **METHOD AND SYSTEM FOR EXTENDING AUTONOMOUS OPERATION OF A SELF-CONTAINED CLIMATE CONTROLLED STORAGE UNIT**
VERFAHREN UND SYSTEM ZUR ERWEITERUNG DES AUTONOMEN BETRIEBS EINER AUTONOMEN KLIMAGESTEUERTEN SPEICHEREINHEIT
PROCÉDÉ ET SYSTÈME D'EXTENSION DU FONCTIONNEMENT AUTONOME D'UNE UNITÉ D'ACCUMULATION À RÉGULATION CLIMATIQUE AUTOCONTENUE

(30) Priority: 31.05.2015 US 201562168878 P
(43) Date of publication of application: 11.04.2018
(73) Proprietor: Thermo King Corporation, Minneapolis, MN 55420 (US)
(72) Inventor: SRNEC, Matthew, Minnetonka, MN 55345 (US); KROES, Paul, J., Eden Prairie, MN 55347 (US)
(74) Representative: Haseltine Lake Kempner LLP
(86) International application number: PCT/US2016/035055
(87) International publication number: WO 2016/196488

(56) References cited:
- WO-A1-2015/007932
- JP-A- 2000 085 449
- JP-A- 2000 085 449
- KR-A- 20090 047 190
- KR-A- 20150 029 883
- US-A1- 2009 212 047
- US-A1- 2011 067 852
- US-A1- 2011 227 727
- US-A1- 2011 265 319
- US-B1- 8 004 242
- US-B2- 8 485 285

## Description

### Field

The disclosure herein relates to a self-contained climate controlled storage unit. More particularly, the disclosure herein relates to a method and system for extending autonomous operation of a self-contained climate controlled storage unit.

### Background

Self-contained climate controlled storage units, such as refrigerated air freight containers (e.g., Thermo King Air 100-RKN), portable refrigeration containers (e.g., Thermo King Cold Cube™ containers), etc. are configured to provide portable climate controlled storage for cargo and in some instances high value/critical cargo. These self-contained climate controlled storage units are typically battery powered and require battery charging prior to transport so that units can provide and maintain climate control (e.g., temperature, humidity, atmosphere, etc.) without external power. In many instances, regulation agencies (e.g., Federal Aviation Administration - FAA, etc.) and trade associations (e.g., International Air Transport Association - IATA, etc.) provide regulations that impose strict performance specifications on self-contained climate controlled storage units. Failure to meet these regulations or attempts to modify these units once certified can result in refusal of certification and entry into, for example, an aircraft. Accordingly, modification to existing self-contained climate controlled storage units can be difficult if not impossible.

The cargo in a self-contained climate controlled storage unit can be at risk the longer the unit is delayed from reaching its destination. That is, the battery source providing power to the self-contained climate controlled storage unit can fully discharge and the climate control capacity of the unit can be exhausted, allowing the cargo to potentially fall out of compliance with climate control requirements. Loss or spoilage of cargo stored in the unit can occur.

Examples of technologies for transporting refrigerated products are given in US2012031686 A1 (vehicle for transporting refrigerated products), US8004242 B1 (tractor and refrigerated trailer combination) and US2009212047 (temperature controlled aircraft cargo container).

### Summary

According to the invention there is provided a mobile charging system for extending autonomous operation of an electrically powered self-contained climate controlled storage unit according to claim 1 and a method for extending autonomous operation of an electrically powered self-contained climate controlled storage unit according to claim 8. Embodiments of the invention are defined in the dependent claims.

The embodiments disclosed herein relate to a self-contained climate controlled storage unit. More particularly, the embodiments disclosed herein relate to a method and system for extending autonomous operation of a self-contained climate controlled storage unit.

The embodiments described herein can extend the run time of a battery source of a self-contained climate controlled storage unit prior to, during, or after transport. In some embodiments, a mobile charging system is provided to extend the run time of a battery source of a self-contained climate controlled storage unit.

For example, for an air freight container, the embodiments described herein can provide power to charge the power source of the air freight container from an origination point to an airport. Accordingly, the power source of the air freight container can be fully charged once the container is stored onto an airplane where the container can no longer be charged. Thus, autonomous operation of the air freight container can be extended.

In another example, the embodiments described herein can be used to charge an empty self-contained climate controlled storage unit prior to loading cargo for shipment. That is, while an empty unit is being transported back to a warehouse for loading, the unit can be charged. Accordingly, the out of service duration of the unit required for charging the unit while sitting in a warehouse can be reduced. This can provide faster turn-around time for using a unit leading to higher utilization of the unit and increased revenue for the unit owner.

The embodiments described herein can extend autonomous operation of a self-contained climate controlled storage unit using one or more charge sources including, for example, shore power, one or more solar panels, an alternator (e.g., an alternator driven by a transport refrigeration unit (TRU), an alternator driven by a tractor engine, etc.), an on-board generator, etc. These charge sources can charge the unit while in storage and/or during transport.

The embodiments described herein can prevent loss of cargo stored in a self-contained climate controlled storage unit when, for example, the self-contained climate controlled storage unit is delayed from reaching its final destination.

Also, the embodiments described herein can provide lock-out and/or tag-out capability for safety.

In one embodiment, a mobile charging system for extending autonomous operation of an electrically powered self-contained climate controlled storage unit. The mobile charging system includes a battery bank, a plurality of charge modules and a system controller. The battery bank is configured to charge the electrically powered self-contained climate controlled storage unit. The plurality of charge modules are configured to charge the battery bank. The system controller is connected to the battery bank and connected to each of the plurality of charge modules. The system controller is configured to control operation of the mobile charging system by communicating with the battery bank and each of the plurality of charge modules.

In another embodiment, a method for extending autonomous operation of an electrically powered self-contained climate controlled storage unit is provided. The method includes one or more of a plurality of charge modules of a mobile charging system charging a battery bank of the mobile charging system. The method also includes connecting the mobile charging system to an electrically powered self-contained climate controlled storage unit. Also, the method includes the mobile charging system charging the electrically powered self-contained climate controlled storage unit using electrical energy stored in the battery bank. Further, the method includes a system controller of the mobile charging system monitoring and controlling charging of the electrically powered self-contained climate controlled storage unit by the battery bank.

Other features and aspects will become apparent by consideration of the following detailed description and accompanying drawings.

### Brief Description of the Drawings

Figs. 1A and 1B illustrate a refrigerated air freight container, according to one embodiment.
Fig. 2 illustrates a block diagram of a mobile charging system for extending autonomous operation of a self-contained climate controlled storage unit, according to one embodiment.
Fig. 3 illustrates a schematic depiction of one embodiment of a mobile charging system for use in a refrigerated transport unit towed by a tractor, according to one embodiment.
Fig. 4 illustrates a side view of a refrigerated transport unit attached to a tractor, according to one embodiment.

### Detailed Description

The embodiments disclosed herein relate to a self-contained climate controlled storage unit. More particularly, the embodiments disclosed herein relate to a method and system for extending autonomous operation of a self-contained climate controlled storage unit.

While some of the embodiments discussed below are discussed with respect to an air freight container, one skilled in the art would recognize the embodiments discussed herein can be provided for any type of electrically powered self-contained climate controlled storage unit (e.g., air freight containers, portable refrigerated storage boxes, etc.).

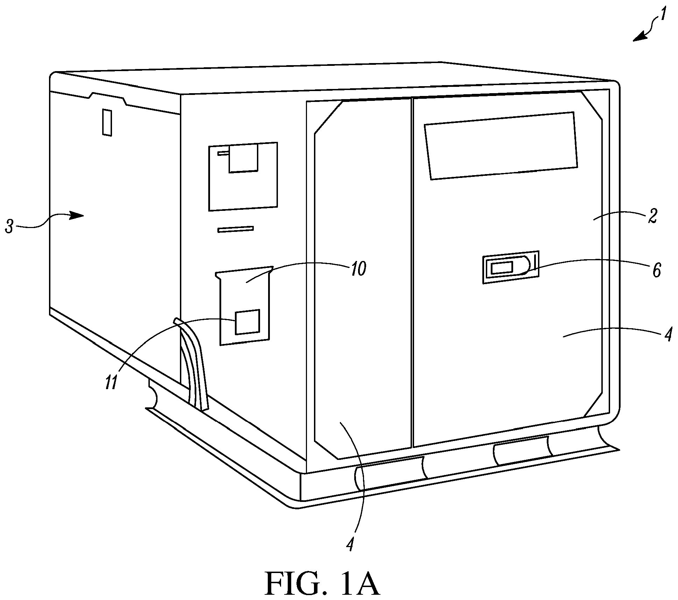

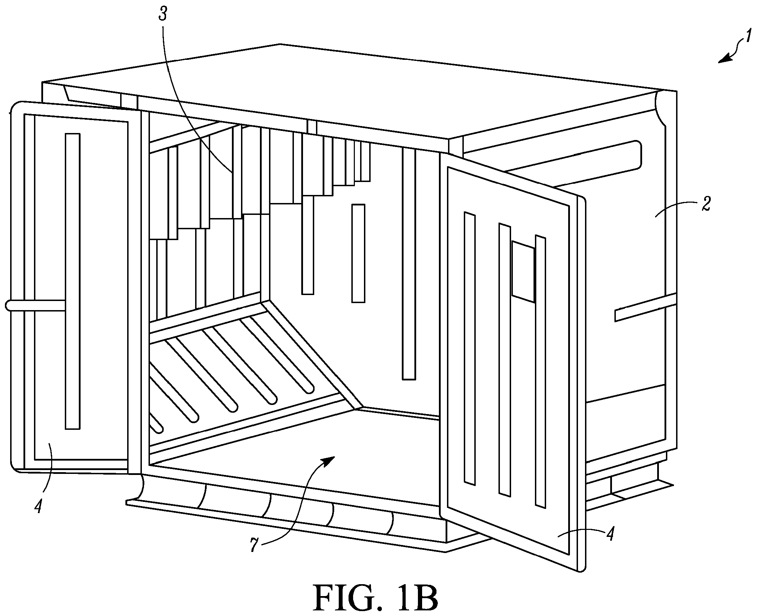

Figs. 1A and 1B illustrate a refrigerated air freight container 1, according to one embodiment. The container 1 includes an insulated housing 2 for an interior space 7, a climate control unit 3, and a power and control unit 10.

The insulated housing 2 according to the embodiment of Figs. 1A-B include insulated side, bottom and top walls configured to generally conform to the shape required of the refrigerated airfreight container 1. One end wall includes doors 4 which are kept closed by a securing mechanism 6.

Access to the interior space 7 is provided by the doors 4. Fig. 1A illustrates a side perspective view of the air freight container 1 with the doors 4 closed. Fig. 1B illustrates another side perspective view of the air freight container 1 with the doors 4 open.

The climate control unit 3 is configured to provide climate control (e.g., temperature, humidity, atmosphere, etc.) within the interior space 7. In particular, the climate control unit 3 can provide climate control to maintain fresh and/or frozen cargo stored within the interior space 7. In one embodiment, the climate control unit 3 can include one or more refrigeration circuits (not shown). Each of the one or more refrigeration circuits can include, for example, a compressor, a condenser, an evaporator and an expansion valve. In one embodiment, one or more condensers (not shown), one or more condenser fans (not shown) and one or more electrical components (e.g., valve(s)) (not shown) can be housed within the climate control unit 3. There can also be one or more evaporators (not shown) and one or more evaporator fans (not shown) housed within one or both of the climate control unit 3 and the interior space 7 to provide climate control within the interior space 7.

The battery and control unit 10 is configured to power and control the climate control unit 3. The battery and control unit 10 includes, for example, a controller (not shown) and a battery source (not shown). In some embodiments, the battery and control unit 10 can also include a human machine interface (HMI) (not shown) that is powered by the battery source and configured to communicate with the controller. The controller is configured to control, for example, the one or more electrical components, the compressor, the one or more condenser and/or evaporator fans, etc. The battery source is configured to provide electrical energy to, for example, the controller, the one or more electrical components, the compressor, the one or more condenser and/or evaporator fans, etc.

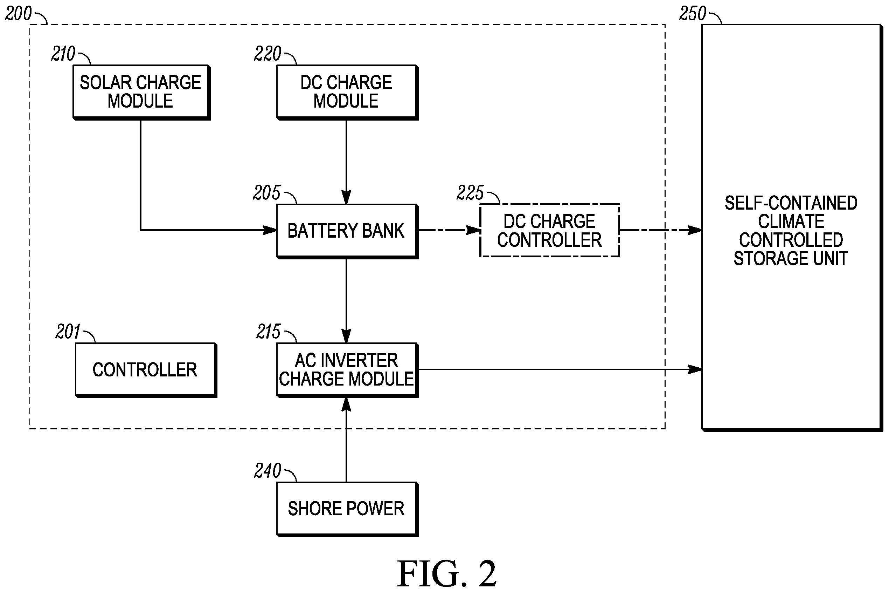

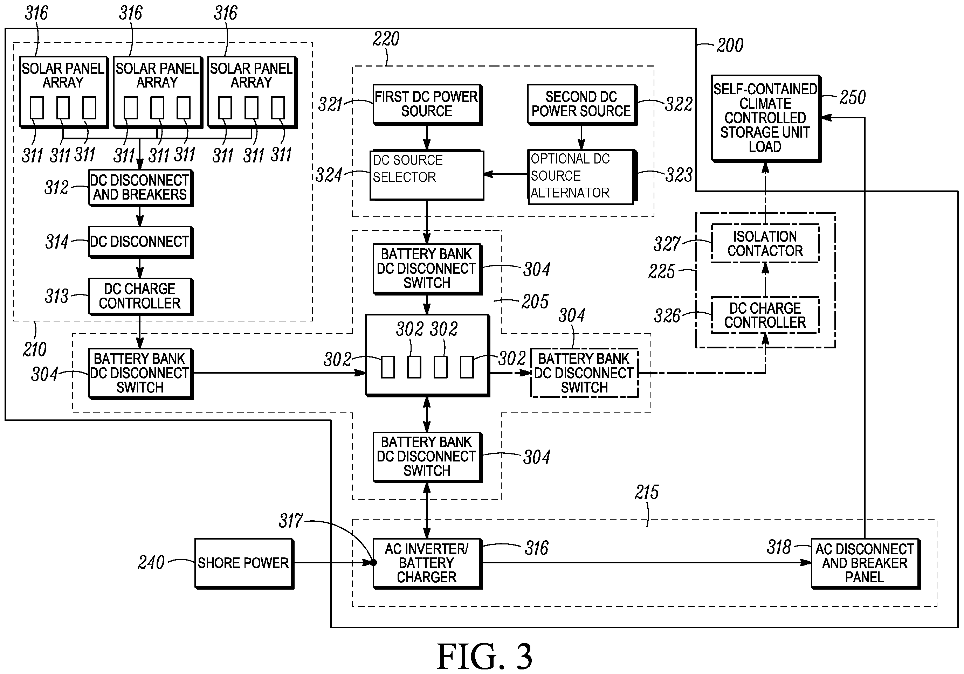

The battery source can include one or more battery banks (not shown) with a DC and/or AC charge input 11 configured to allow an external power source to charge the one or more battery banks. When charge input 11 includes a DC charge input, the battery source can also include a DC charge controller, a DC isolation connection, and a DC disconnect switch. When the charge input 11 includes an AC charge input, the battery source can also include an AC inverter, an AC charger, and an AC disconnect switch and a breaker panel. Embodiments of systems for extending autonomous operation of a self-contained climate controlled storage unit, such as the air freight container 1, are described below with respect to Figs. 2 and 3.

Fig. 2 illustrates a block diagram of a mobile charging system 200 for extending autonomous operation of a self-contained climate controlled storage unit 250 (e.g., the air freight container 1 shown in Fig. 1). The system 200 can be provided, for example, on a trailer, a truck, a bus, a rail car, a cart, etc. and can charge a self-contained climate controlled storage unit while the unit is in transit and/or while the unit is in storage. In some embodiments, the charging system 200 can be a self-contained mobile power source.

The self-contained climate controlled storage unit 250 can be, for example, a conventional refrigerated air freight container (e.g., Thermo King Air 100-RKN), a portable refrigeration container (e.g., Thermo King Cold Cube™ container), etc., that is configured to provide portable climate controlled storage for cargo and in some instances high value/critical cargo. The self-contained climate controlled storage unit 250 is generally battery powered and requires battery charging prior to, during and/or after transport so as to provide and maintain climate control (e.g., temperature, humidity, atmosphere, etc.) within an interior space of the self-contained climate controlled storage unit 250.

When the self-contained climate controlled storage unit 250 is a conventional refrigerated air freight container, regulation agencies (e.g., Federal Aviation Administration - FAA, etc.) and trade associations (e.g., International Air Transport Association - IATA, etc.) provide regulations that impose strict performance specifications on the self-contained climate controlled storage unit 250. These regulations also prohibit charging of the self-contained climate controlled storage unit 250 (e.g., via an airplane electric system) during air transport. Failure to meet these regulations or attempts to modify the self-contained climate controlled storage unit 250 once certified can result in refusal of certification, fines and/or entry into, for example, an aircraft. Accordingly, modification to the self-contained climate controlled storage unit 250 or charging during air transport can be difficult if not impossible. In some embodiments, the conventional refrigerated air freight container includes one or more batteries (not shown) and an AC charge input (not shown) that requires AC electrical energy in order to charge the one or more batteries. In these embodiments, the conventional refrigerated air freight container does not include a DC charge input for allowing DC electrical energy to charge the one or more batteries. In other embodiments, the conventional refrigerated air freight container includes one or more batteries, an AC charge input, and a DC charge input (not shown). In these embodiments, the self-contained climate controlled storage unit 250 can detect the source type and depending on the source type be charged using AC electrical energy and/or DC electrical energy. In yet some other embodiments, the conventional refrigerated air freight container includes one or more batteries and a DC chart input. In these embodiments, the self-contained climate controlled storage unit 250 can be charged using DC electrical energy.

In some embodiments, the self-contained climate controlled storage unit 250 includes a battery bank (not shown) that can be charged via the mobile charging system 200. Also, in some embodiments, the mobile charging system 200 can merely provide power to maintain refrigeration set point within the self-contained climate controlled storage unit 250 without charging the battery bank of the self-contained climate controlled storage unit 250.

The system 200 includes a controller 201, a battery bank 205 and a plurality of charge modules for charging the battery bank 205 including a solar charge module 210, an AC inverter charge module 215 and a DC charge module 220. The system 200 also can include an optional DC charge controller 225 that is connected to the battery bank 205.

While not shown, the controller 201 is connected to the battery bank 205, each of the charge modules 210, 215, 220, and the optional DC charge controller 225. The controller 201 is configured to control operation of the system 200 by communicating with each of the battery bank 205, each of the charge modules 210, 215, 220, and the optional DC charge controller 225.

Each of the charge modules 210, 215 and 220 are configured to provide electrical energy to the battery bank 205 in order to charge the battery bank 205 in a manner compatible with the batteries in the battery bank 205. For example, in some embodiments, the charge modules 210, 215 and 220 are configured to provide DC electrical energy to the battery bank 205 in order to charge the battery bank 205. The AC inverter charge module 215 can be connected, for example, to a shore power source 240 for charging the battery bank 205. The DC charge module 220 can include, for example, one or more DC power sources for charging the battery bank 205.

Additionally, the AC inverter charge module 215 and the optional DC charge controller 225 are configured to provide electrical energy from the battery bank 205 to the self-contained climate controlled storage unit 250. In some embodiments, one or more solar panels of the solar charge module 210 can be provided, for example, on a roof or side wall of a trailer, truck, etc. Other portions of the solar charge module 210 and the rest of the system 200 can be provided, for example, in a housing stored inside or below a trailer, truck, etc. Also, in some embodiments, the system 200 may include two or more solar charge modules, AC inverter charge modules, DC charge modules, DC charge controllers, etc. In some embodiments, the system 200 may not include one or more of the solar charge module 210, the AC inverter charge module 215, the DC charge module 220, and/or the optional DC charge controller 225. One example of the system 200 is described below with respect to Fig. 3.

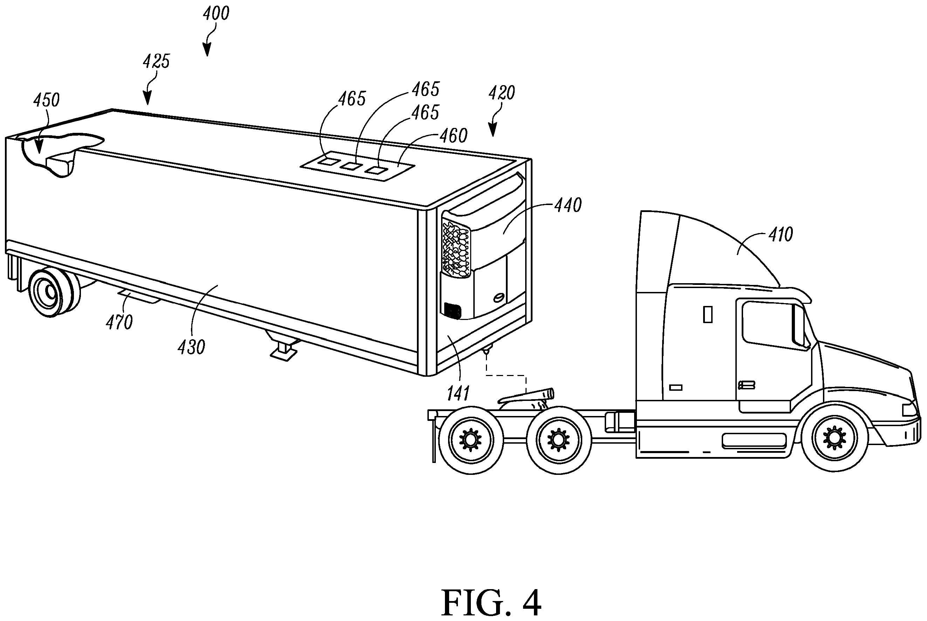

Fig. 3 illustrates a schematic depiction of one embodiment of the mobile charging system 200 for use in a refrigerated transport unit (not shown) towed by a tractor (not shown) (see, e.g., Fig. 4). The refrigerated transport unit can store, for example, one or more self-contained climate controlled storage units 250. The mobile charging system 200 can extend the run time of the one or more self-contained climate controlled storage units 250 by charging the one or more self-contained climate controlled storage units 250 during transport for pre-shipment charging (e.g., from an origination point to an airport), for post-shipment charging (e.g., from an airport to a destination point), etc. In some embodiments, the mobile charging system 200 can utilize green energy sources (e.g., via the solar charge module 210) and/or in use energy driven power sources (e.g., via the DC charge module 220) to charge the self-contained climate controlled storage unit 250. For the sake of clarity, the controller 201 is not shown in Fig. 3.

The battery bank 205 includes a plurality of batteries 302 used for storing electrical energy for charging the self-contained climate controlled storage unit 250 and a plurality of battery bank DC disconnect switches 304 configured to electrically isolate the batteries 302 from the charge modules (e.g., the solar charge module 210, the AC inverter charge module 215 and the DC charge module 220), the AC inverter charge module 215 and the optional DC charge controller 225 in the event of an overload (e.g., over current, arc current, etc.) or short circuit.

In one embodiment, the batteries 302 can include three pairs of batteries 302 in which each of the batteries 302 in a pair are connected to each other in series. The three pairs of batteries 302 can be connected in parallel. It is appreciated that in other embodiments the plurality of batteries 302 can be connected in any configuration desired for storing charge and providing electrical energy to the self-contained climate controlled storage unit 250. It is also appreciated that the number of batteries 302 can vary based on the requirements of the system 200. That is, in some embodiments, the battery bank 205 can include between one and six batteries 302 and in other embodiments, the battery bank 205 can include seven or more batteries 302. In some embodiments, the one or more batteries 302 can be ∼24 volt batteries. In other embodiments, the one or more batteries 302 can be ∼12 volt batteries. It is appreciated that the voltage of the batteries 302 can vary based on the requirements of the system 200. In some embodiments, the batteries 302 can be, for example, absorbent glass mat (AGM) batteries.

In some embodiments, the battery bank 305 can be sized to provide, at minimum, a full charge for the self-contained climate controlled storage unit 250.

The solar charge module 210 includes a plurality of solar panels 311, a DC disconnect and breaker component 312 connected to the plurality of solar panels 311, a solar charge DC disconnect switch 314 connected to the DC disconnect and breaker component 312, and a DC charge controller 313 connected to the solar charge DC disconnect switch 314. While the solar charge module 210 includes a plurality of solar panels 311, it will be appreciated that in some embodiments, only a single solar panel 311 is required.

For example, in one embodiment, each of the plurality of solar panels 311 can be, for example, about 17 to 20 open circuit voltage solar panels. The solar charge module 210 can include, for example, 20 solar panels 311 arranged in four solar arrays 316 with five solar panels 311 connected in series within each solar array 316. Accordingly, each of the solar arrays 316 can provide about 100 volts of solar energy, and the four solar arrays 316 can provide a total of about 400 volts of solar energy.

It will be appreciated that in other embodiments the number of solar arrays 316 and the arrangement of the solar panels 311 (e.g., the use of solar arrays, the number of solar panels within each solar array, etc.) can vary based on application requirements.

In one embodiment, the solar panels 311 can be disposed, for example, on a roof or side wall of the refrigerated transport unit (see Fig. 4).

The DC disconnect and breaker component 312 is configured to combine the voltage obtained from each of the solar arrays 316 and electrically isolate the solar panels 312 from other portions of the solar charge module 210 in the event of an overload or short circuit. The solar charge DC disconnect switch 314 is configured to electrically isolate the DC disconnect and breaker component 312 from other portions of the solar charge module 210 (including the DC charge controller 313) in the event of an overload or short circuit. The DC charge controller 313 is configured to act as a voltage and/or current regulator to regulate the voltage from the solar panels 312 to the battery bank 205 to prevent one or more of the batteries 302 from overcharging.

The AC inverter charge module 215 is configured to provide electrical energy to the battery bank 205 in order to charge the batteries 302 and is configured to provide AC electrical energy from the battery bank 205 to the self-contained climate controlled storage unit 250. The AC inverter charge module 215 includes an inverter and battery charger 316, a shore power outlet 317, and an AC disconnect and breaker component 318.

In some embodiments, the shore power outlet 317 is configured to allow the AC inverter charge module 215 to connect to a shore power source (e.g., the shore power source 240 shown in Fig. 2). The inverter and battery charger 316 is configured to manage and control the AC electrical energy obtained from the shore power outlet 317 in a manner compatible with the batteries 302 in the battery bank 205.

The inverter and battery charger 316 is also configured to receive electrical energy from the battery bank 205 and convert the electrical energy into AC electrical energy compatible with the AC charge input of the self-contained climate controlled storage unit 250. The converted AC electrical energy is sent from the inverter and battery charger 316 via the AC disconnect and breaker component 318 to an AC charge input (not shown) of the self-contained climate controlled storage unit 250. The AC disconnect and breaker component 318 is configured to electrically isolate the AC inverter and battery charger 316 from self-contained climate controlled storage unit 250 in the event of an overload or short circuit. Also, the AC disconnect and breaker component 318 can be configured to protect the batteries in the self-contained climate controlled storage unit 250 from discharging when the mobile charging system 200 is not providing charge to the self-contained climate controlled storage unit 250 via the AC charge input.

It will be appreciated that in some embodiments, the AC inverter charge module 215 may not include the inverter and battery charger 316, and/or the mobile charging system 200 can include a separate on-board or off-board charging system that can provide electrical energy to the AC charge input of the self-contained climate controlled storage input in a manner that is compatible with the with the AC charge input of the self-contained climate controlled storage unit 250.

The DC charge module 220 is configured to provide electrical energy to the battery bank 205 in order to charge the batteries 302. The DC charge module 220 shown in Fig. 3 includes a first DC power source 321, a second DC power source 322 with an optional DC source alternator 323, and a DC source selector 324. It will be appreciated the number and types of DC power sources in the DC charge module 220 can vary based on the particular application requirements. Also, it will be appreciated that any DC power sources (including e.g., the first DC power source 321, the second DC power source 322 with the optional DC source alternator 323, etc.) used to charge the batteries 302 can be part of or separate from the DC charge module 220. The first DC power source 321 is configured to generate electrical energy for charging the battery bank 205. In some embodiments, the first DC power source 321 can be, for example, a tractor alternator or battery, an auxiliary battery (e.g, for powering lift gates), etc.

The second DC power source 322 with the optional DC source alternator 323 is configured to generate electrical energy for charging the battery bank 205. In some embodiments, the second DC power source 322 can be, for example, a transport refrigeration unit (TRU) engine or other engine driven source. The optional DC source alternator 323 is configured to convert mechanical energy generated by the second DC power source 322 into electrical energy.

It will be appreciated that first and second DC power sources 321, 322 can include, for example, a prime mover (e.g., internal combustion engine), a truck or trailer axel power take-off power source, a truck or trailer hydraulic power source, etc.

In some embodiments, the first and second DC power sources 321, 322 can be, for example, ∼12 volt and/or ∼24 volt power sources, depending on the requirements of the mobile charging system 200.

The DC charge source selector 324 is configured to switch between the first DC power source 321, the second DC power source 322 (with the optional DC source alternator 323) or both in order to charge the battery bank 205. In some embodiments, the DC charge source selector 324 is configured to manage and control the electrical energy obtained from one or both of the first DC power source 322 and the second DC power source 323 in a manner compatible with the batteries 302 in the battery bank 205.

The optional DC charge controller 225 is configured to provide DC electrical energy from the battery bank 205 to the self-contained climate controlled storage unit 250. That is, the optional DC charge controller 225 is provided when the self-contained climate controlled storage unit 250 includes a DC charge input. The optional DC charge controller 225 includes a DC charge controller 326 and an isolation contactor 327 for DC connection with a DC charge input of the self-contained climate controlled storage unit 250. The DC charge controller 326 is configured to act as a voltage and/or current regulator to regulate the voltage from the batteries 302 in a manner compatible with the DC charge input of the self-contained climate controlled storage unit 250 for charging the self-contained climate controlled storage unit 250. The isolation contactor 327 is configured to provide electrical isolation between the optional DC charge controller 225 and the DC charge input of the self-contained climate controlled storage unit 250 when the optional DC charge controller 225 is connected to the DC charge input of the self-contained climate controlled storage unit 250, provide a disconnect during non-operation and provide fault current breaking in the event of an overload or short circuit. Also, the isolation contactor 327 can be configured to protect the batteries in the self-contained climate controlled storage unit 250 from discharging when the mobile charging system 200 is not providing charge to the self-contained climate controlled storage unit 250 via the DC charge input.

In operation, the controller 201 can include a solar charging mode in which the solar charge module 210 is configured to charge the battery bank 205 and thereby the self-contained climate controlled storage unit 250 when, for example, the AC inverter charge module is not receiving power from a shore power source (e.g., the shore power source 240). The controller 201 can also include a solar power supplying mode in which the solar charge module 210 is configured to supply power (via the mobile charging system) to the self-contained climate controlled storage unit 250 to maintain a refrigeration set point without charging batteries of the self-contained climate controlled storage unit 250.

Fig. 4 illustrates a side view of a refrigerated transport unit 400 attached to a tractor, 410 according to one embodiment. The refrigerated transport unit 400 includes a transport refrigeration system (TRS) 420, a mobile charging system 425 and a transport unit 430. The TRS 420 is configured to control a temperature of an internal space 450 of the transport unit 430. In particular, the TRS 420 is configured to transfer heat between an internal space 450 and the outside environment. In some embodiments, the TRS 420 is a multi-zone system in which different zones or areas of the internal space 450 are controlled to meet different refrigeration requirements based on the cargo stored in the particular zone. The TRS 420 includes a transport refrigeration unit (TRU) 440 for providing climate control within the internal space 450. The internal space 450 can store cargo including, for example, one or more self-contained climate controlled storage units that can be charged by the mobile charging system 425.

The mobile charging system 425 can be configured, for example, similar to the mobile charging system 200 shown in Figs. 2 and 3. The mobile charging system 425 includes a solar charging unit 460 and a mobile charging system storage unit 470. The solar charging module 460 includes portions of a solar charging module of the mobile charging system 425 including a plurality of solar panel arrays 465. Each of the solar panel arrays 464 include a plurality of solar panels (not shown). In some embodiments, the solar charging unit 460 can be used by the mobile charging system 425 and provide electrical energy for use by the TRS 420.

The mobile charging system storage unit 470 can store portions of the mobile charging system 425 including, for example, a battery bank (e.g., the battery bank 205 shown in Figs. 2 and 3), remaining portions of a solar charge module (e.g., the solar charge module 210 shown in Figs. 2 and 3), an AC inverter charge module (e.g., the AC inverter charge module 215 shown in Figs. 2 and 3), a DC charge module (e.g., the DC charge module 220), a DC charge controller (e.g., the optional DC charge controller 225 shown in Figs. 2 and 3), etc.

The terminology used in this Specification is intended to describe particular embodiments and is not intended to be limiting. The terms "a," "an," and "the" include the plural forms as well, unless clearly indicated otherwise. The terms "comprises" and/or "comprising," when used in this Specification, specify the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts without departing from the scope of the present disclosure. The word "embodiment" as used within this Specification may, but does not necessarily, refer to the same embodiment. This Specification and the embodiments described are exemplary only. Other and further embodiments may be devised without departing from the basic scope thereof, with the true scope of the disclosure being indicated by the claims that follow.

## Claims

1. A mobile charging system (200) for extending autonomous operation of an electrically powered self-contained climate controlled storage unit (250), the mobile charging system comprising:
a battery bank (205) for charging the electrically powered self-contained climate controlled storage unit;
a plurality of charge modules (210) for charging the battery bank;
a system controller (313) connected to the battery bank and connected to each of the plurality of charge modules, wherein the system controller is configured to control operation of the mobile charging system by communicating with the battery bank and each of the plurality of charge modules; and
an AC inverter charge module (215) connected to the battery bank and configured to provide electrical energy from the battery bank to the electrically powered self-contained climate controlled storage unit;
wherein the AC inverter charge module is configured to connect to a shore power source (240), receive shore power electrical energy from the shore power source, manage and control the shore power electrical energy into electrical energy compatible for at least one of the battery bank and the electrically powered self-contained climate controlled storage unit, and deliver the electrical energy to at least one of the battery bank (205) and the electrically powered self-contained climate controlled storage unit (250).

2. The mobile charging system of claim 1, further comprising a DC charge controller (326) connected to the battery bank and configured to provide electrical energy from the battery bank to the electrically powered self-contained climate controlled storage unit.

3. The mobile charging system of claim 1, wherein the plurality of charge modules includes a solar charge module (210) configured to absorb solar energy, convert the solar energy into electrical energy, and provide the electrical energy to the battery bank for charging the battery bank.

4. The mobile charging system of claim 3, wherein the solar charge module includes:
a solar panel (316) for absorbing solar energy and converting the solar energy into electrical energy,
a DC disconnect and breaker component 312) connected to the solar panel, wherein the DC disconnect and breaker component is configured to electrically isolate the solar panel during an electrical overload or short circuit,
a solar charge DC disconnect switch (314) connected to the DC disconnect and breaker component, wherein the solar charge DC disconnect switch is configured to electrically isolate the DC disconnect and breaker component during an electrical overload or short circuit, and
a DC charge controller (313) connected to the solar charge DC disconnect switch (304), wherein the DC charge controller is configured to regulate the electrical energy generated by the solar panel to be sent to the battery bank.

5. The mobile charging system of claim 1, wherein the plurality of charge modules includes a DC charge module configured to provide DC electrical energy to the battery bank for charging the battery bank, wherein the DC charge module includes:
a first DC power source (321) for providing electrical energy to the battery bank;
a second DC power source (322) for providing electrical energy to the battery bank; and
a DC source selector (324) configured to manage and control the electrical energy obtained from the first DC power source and the second DC power source and sent to the battery bank.

6. The mobile charging system of claim 5, wherein the first DC power source (321) is one or more of a tractor alternator, a tractor battery, and an auxiliary tractor battery,
wherein the DC charge module further includes a DC source alternator,
wherein the second DC power source is one or more of a transport refrigeration unit engine and a tractor engine, and
wherein the DC source alternator is configured to convert mechanical energy from the second DC power source into electrical energy for the battery bank.

7. The mobile charging system of claim 1, wherein the mobile charging system (200) is simultaneously connected to a plurality of electrically powered self-contained climate controlled storage units and the system controller is configured to control the battery bank to provide electrical energy to each of the plurality of electrically powered self-contained climate controlled storage units.

8. A method for extending autonomous operation of an electrically powered self-contained climate controlled storage unit (250), the method comprising:
one or more of a plurality of charge modules (210) of a mobile charging system (200) charging a battery bank (205) of the mobile charging system;
connecting the mobile charging system to an electrically powered self-contained climate controlled storage unit (250);
the mobile charging system charging the electrically powered self-contained climate controlled storage unit using electrical energy stored in the battery bank;
a system controller (201) of the mobile charging system monitoring and controlling charging of the electrically powered self-contained climate controlled storage unit by the battery bank;
connecting an AC inverter charge module (316) of the mobile charging system to a shore power source (240);
the AC inverter charge module receiving shore power electrical energy from the shore power source;
the AC inverter charge module managing and controlling the shore power electrical energy into electrical energy compatible for at least one of the battery bank and the electrically powered self-contained climate controlled storage unit; and
delivering the electrical energy to at least one of the battery bank and the electrically powered self-contained climate controlled storage unit.

9. The method of claim 8, further comprising:
directing the electrical energy stored in the battery bank (205) through an AC inverter charge module of the mobile charging system;
the AC inverter charge module (316) converting the electrical energy into AC electrical energy compatible with an AC charge input of the electrically powered self-contained climate controlled storage unit; and
directing the AC electrical energy to the AC charge input.

10. The method of claim 8, wherein one of the plurality of charge modules is a solar charge module (210) the solar charge module:
absorbing solar energy;
converting the solar energy into electrical energy; and
providing the electrical energy to the battery bank for charging the battery bank.

11. The method of claim 8, wherein one of the plurality of charge modules is a DC charge module and the method further including:
a first DC power source (321) delivering electrical energy to a DC source selector of the DC charge module;
a second DC power source (322) delivering electrical energy to the DC source selector;
the DC source selector (324) directing the electrical energy from one or more of the first DC power source and the second DC power source to the battery bank,
wherein the first DC power source is one or more of a tractor alternator, a tractor battery, and an auxiliary tractor battery,
wherein the second DC power source is one or more of a transport refrigeration unit and a tractor engine, and
wherein a DC source alternator of the DC charge module converting mechanical energy from the second DC power source into electrical energy.

12. The method of claim 8, wherein the mobile charging system (200) charging the electrically powered self-contained climate controlled storage unit includes charging the electrically powered self-contained climate controlled storage unit during transport of the electrically powered self-contained climate controlled storage unit.

13. The method of claim 8, further comprising:
simultaneously connecting the mobile charging system (200) to a second electrically powered self-contained climate controlled storage unit;
the mobile charging system charging the second electrically powered self-contained climate controlled storage unit using the electrical energy stored in the battery bank; and
the system controller (201) of the mobile charging system monitoring and controlling charging of the electrically powered self-contained climate controlled storage unit and the second electrically powered self-contained climate controlled storage unit by the battery bank.

## Patentansprüche

1. Mobiles Ladesystem (200) zum Erweitern des autonomen Betriebs einer elektrisch betriebenen, in sich geschlossenen, klimatisierten Lagereinheit (250), wobei das mobile Ladesystem umfasst:
eine Batteriebank (205) zum Laden der elektrisch betriebenen, in sich geschlossenen, klimatisierten Lagereinheit;
mehrere Lademodule (210) zum Laden der Batteriebank;
eine Systemsteuerung (313), die mit der Batteriebank verbunden ist und mit jedem der mehreren Lademodule verbunden ist, wobei die Systemsteuerung dafür ausgelegt ist, den Betrieb des mobilen Ladesystems zu steuern, indem sie mit der Batteriebank und jedem der mehreren Lademodule kommuniziert; und
ein Wechselstrom (AC)-Umrichter-Lademodul (215), das mit der Batteriebank verbunden und dafür ausgelegt ist, elektrische Energie von der Batteriebank an die elektrisch betriebene, in sich geschlossene, klimatisierte Lagereinheit bereitzustellen;
wobei das AC-Umrichter-Lademodul dafür ausgelegt ist, sich mit einer Landstromquelle (240) zu verbinden, elektrische Landstromenergie von der Landstromquelle zu empfangen, die elektrische Landstromenergie zu verwalten und in elektrische Energie umzuregeln, die mit wenigstens entweder der Batteriebank und/oder der elektrisch betriebenen, in sich geschlossenen, klimatisierten Lagereinheit kompatibel ist, und die elektrische Energie an wenigstens entweder die Batteriebank (205) und/oder die elektrisch betriebene, in sich geschlossene, klimatisierte Lagereinheit (250) zu liefern.

2. Mobiles Ladesystem nach Anspruch 1, ferner einen Gleichstrom (DC)-Laderegler (326) umfassend, der mit der Batteriebank verbunden und dafür ausgelegt ist, elektrische Energie von der Batteriebank an die elektrisch betriebene, in sich geschlossene, klimatisierte Lagereinheit bereitzustellen.

3. Mobiles Ladesystem nach Anspruch 1, wobei die mehreren Lademodule ein Solarlademodul (210) beinhalten, das dafür ausgelegt ist, Solarenergie zu absorbieren, die Solarenergie in elektrische Energie umzuwandeln und die elektrische Energie an die Batteriebank bereitzustellen, um die Batteriebank zu laden.

4. Mobiles Ladesystem nach Anspruch 3, wobei das Solarlademodul aufweist:
ein Solarmodul (316) zum Absorbieren von Sonnenenergie und Umwandeln der Sonnenenergie in elektrische Energie, eine DC-Trenn- und Unterbrecherkomponente (312), die mit dem Solarmodul verbunden ist, wobei die DC-Trenn- und Unterbrecherkomponente dafür ausgelegt ist, das Solarmodul während einer elektrischen Überlast oder eines Kurzschlusses elektrisch zu isolieren,
einen Solarladungs-DC-Trennschalter (314), der mit der DC-Trenn- und Unterbrecherkomponente verbunden ist, wobei der Solarladungs-DC-Trennschalter dafür ausgelegt ist, die DC-Trenn- und Unterbrecherkomponente während einer elektrischen Überlast oder eines Kurzschlusses elektrisch zu isolieren, und
einen DC-Laderegler (313), der mit dem Solarladungs-DC-Trennschalter (304) verbunden ist, wobei der DC-Laderegler dafür ausgelegt ist, die vom Solarmodul erzeugte elektrische Energie zu regeln, die an die Batteriebank zu senden ist.

5. Mobiles Ladesystem nach Anspruch 1, wobei die mehreren Lademodule ein DC-Lademodul beinhalten, das dafür ausgelegt ist, elektrische DC-Energie an die Batteriebank bereitzustellen, um die Batteriebank zu laden, wobei das DC-Lademodul umfasst:
eine erste DC-Stromquelle (321) zum Bereitstellen von elektrischer Energie an die Batteriebank;
eine zweite DC-Stromquelle (322) zum Bereitstellen von elektrischer Energie an die Batteriebank; und
einen DC-Quellenwähler (324), der dafür ausgelegt ist, die von der ersten DC-Stromquelle und der zweiten DC-Stromquelle gewonnene und an die Batteriebank gesendete elektrische Energie zu verwalten und zu regeln.

6. Mobiles Ladesystem nach Anspruch 5, wobei die erste DC-Stromquelle (321) eines oder mehrere von einer Zugmaschinenlichtmaschine, einer Zugmaschinenbatterie und einer Zugmaschinenhilfsbatterie ist,
wobei das DC-Lademodul ferner eine DC-Lichtmaschine aufweist,
wobei die zweite DC-Stromquelle eines oder mehrere von einer Maschine einer Kühltransporteinheit und einer Maschine einer Zugmaschine ist, und
wobei die DC-Lichtmaschine dafür ausgelegt ist, mechanische Energie von der zweiten DC-Stromquelle in elektrische Energie für die Batteriebank umzuwandeln.

7. Mobiles Ladesystem nach Anspruch 1, wobei das mobile Ladesystem (200) gleichzeitig mit mehreren elektrisch betriebenen, in sich geschlossenen, klimatisierten Lagereinheiten verbunden ist und die Systemsteuerung dafür ausgelegt ist, die Batteriebank zu steuern, um jeder der mehreren elektrisch betriebenen, in sich geschlossenen, klimatisierten Lagereinheiten elektrische Energie bereitzustellen.

8. Verfahren zum Erweitern des autonomen Betriebs einer elektrisch betriebenen, in sich geschlossenen, klimatisierten Lagereinheit (250), wobei das Verfahren umfasst:
eines oder mehrere von mehreren Lademodulen (210) eines mobilen Ladesystems (200), die eine Batteriebank (205) des mobilen Ladesystems laden;
Verbinden des mobilen Ladesystems mit einer elektrisch betriebenen, in sich geschlossenen, klimatisierten Lagereinheit (250);
wobei das mobile Ladesystem die elektrisch betriebene, in sich geschlossene, klimatisierte Lagereinheit mittels elektrischer Energie lädt, die in der Batteriebank gespeichert ist;
eine Systemsteuerung (201) des mobilen Ladesystems, die das Laden der elektrisch betriebenen, in sich geschlossenen, klimatisierten Lagereinheit durch die Batteriebank überwacht und steuert;
Verbinden eines AC-Umrichter-Lademoduls (316) des mobilen Ladesystems mit einer Landstromquelle (240);
wobei das AC-Umrichter-Lademodul elektrische Landstrom-Energie von der Landstromquelle empfängt;
wobei das AC-Umrichter-Lademodul die elektrische Landstrom-Energie verwaltet und in elektrische Energie umregelt, die mit wenigstens entweder der Batteriebank und/oder der elektrisch betriebenen, in sich geschlossenen, klimatisierten Lagereinheit kompatibel ist; und
Liefern der elektrischen Energie an wenigstens entweder die Batteriebank und/oder die elektrisch betriebene, in sich geschlossene, klimatisierte Lagereinheit.

9. Verfahren nach Anspruch 8, ferner umfassend:
Durchleiten der in der Batteriebank (205) gespeicherten elektrischen Energie durch ein AC-Umrichter-Lademodul des mobilen Ladesystems;
wobei das AC-Umrichter-Lademodul (316) die elektrische Energie in elektrische AC-Energie umwandelt, die mit einem AC-Ladeeingang der elektrisch betriebenen, in sich geschlossenen, klimatisierten Lagereinheit kompatibel ist; und
Leiten der elektrischen AC-Energie an den AC-Ladeeingang.

10. Verfahren nach Anspruch 8, wobei eines der mehreren Lademodule ein Solarlademodul (210) ist, wobei das Solarlademodul:
Solarenergie absorbiert;
die Solarenergie in elektrische Energie umwandelt; und
die elektrische Energie an die Batteriebank bereitstellt, um die Batteriebank zu laden.

11. Verfahren nach Anspruch 8, wobei eines der mehreren Lademodule ein DC-Lademodul ist und das Verfahren ferner umfasst:
eine erste DC-Stromquelle (321), die elektrische Energie an einen DC-Quellenwähler des DC-Lademoduls liefert;
eine zweite DC-Stromquelle (322), die elektrische Energie an den DC-Quellenwähler liefert;
wobei der DC-Quellenwähler (324) die elektrische Energie von einer oder mehreren der ersten DC-Stromquelle und der zweiten DC-Stromquelle an die Batteriebank leitet,
wobei die erste DC-Stromquelle eines oder mehrere von einer Zugmaschinenlichtmaschine, einer Zugmaschinenbatterie und einer Zugmaschinenhilfsbatterie ist,
wobei die zweite DC-Stromquelle eines oder mehrere von einer Kühltransporteinheit und einer Maschine einer Zugmaschine ist, und
wobei eine DC-Lichtmaschine des DC-Lademoduls mechanische Energie von der zweiten DC-Stromquelle in elektrische Energie umwandelt.

12. Verfahren nach Anspruch 8, wobei das Laden der elektrisch betriebenen, in sich geschlossenen, klimatisierten Lagereinheit durch das mobile Ladesystem (200) beinhaltet, die elektrisch betriebene, in sich geschlossene, klimatisierte Lagereinheit während des Transports der elektrisch betriebenen, in sich geschlossenen, klimatisierten Lagereinheit zu laden.

13. Verfahren nach Anspruch 8, ferner umfassend:
gleichzeitiges Verbinden des mobilen Ladesystems (200) mit einer zweiten elektrisch betriebenen, in sich geschlossenen, klimatisierten Lagereinheit;
wobei das mobile Ladesystem die zweite elektrisch betriebene, in sich geschlossene, klimatisierte Lagereinheit mittels der elektrischen Energie lädt, die in der Batteriebank gespeichert ist; und
wobei die Systemsteuerung (201) des mobilen Ladesystems das Laden der elektrisch betriebenen, in sich geschlossenen, klimatisierten Lagereinheit und der zweiten elektrisch betriebenen, in sich geschlossenen, klimatisierten Lagereinheit durch die Batteriebank überwacht und steuert.

## Revendications

1. Système de charge mobile (200) pour prolonger le fonctionnement autonome d'une unité de stockage à régulation climatique autonome alimentée électriquement (250), le système de charge mobile comprenant :
un bloc batterie (205) pour charger l'unité de stockage à régulation climatique autonome alimentée électriquement ;
une pluralité de modules de charge (210) pour charger le bloc batterie ;
une unité de commande de système (313) connectée au bloc batterie et connectée à chaque module de la pluralité de modules de charge, l'unité de commande de système étant configurée pour commander le fonctionnement du système de charge mobile en communiquant avec le bloc batterie et chaque module de la pluralité de modules de charge ; et
un module de charge d'onduleur C.A. (215) connecté au bloc batterie et configuré pour fournir une énergie électrique du bloc batterie à l'unité de stockage à régulation climatique autonome alimentée électriquement ;
dans lequel le module de charge d'onduleur C.A. est configuré pour être connecté à une source d'alimentation aux quais (240), recevoir une énergie électrique d'alimentation aux quais à partir de la source d'alimentation aux quais, gérer et commander l'énergie électrique d'alimentation aux quais en une énergie électrique compatible pour le bloc batterie et/ou l'unité de stockage à régulation climatique autonome alimentée électriquement, et délivrer l'énergie électrique au bloc batterie (205) et/ou à l'unité de stockage à régulation climatique autonome alimentée électriquement (250).

2. Système de charge mobile selon la revendication 1, comprenant en outre une unité de commande de charge C.C. (326) connectée au bloc batterie et configurée pour fournir une énergie électrique du bloc batterie à l'unité de stockage à régulation climatique autonome alimentée électriquement.

3. Système de charge mobile selon la revendication 1, dans lequel la pluralité de modules de charge comporte un module de charge solaire (210) configuré pour absorber l'énergie solaire, convertir l'énergie solaire en énergie électrique, et fournir l'énergie électrique au bloc batterie pour charger le bloc batterie.

4. Système de charge mobile selon la revendication 3, dans lequel le module de charge solaire comporte :
un panneau solaire (316) pour absorber l'énergie solaire et convertir l'énergie solaire en énergie électrique,
un composant de déconnexion et disjonction C.C. (312) connecté au panneau solaire, le composant de déconnexion et disjonction C.C. étant configuré pour isoler électriquement le panneau solaire durant une surcharge électrique ou un court-circuit,
un commutateur de déconnexion C.C de charge solaire (314) connecté au composant de déconnexion et disjonction C.C., le commutateur de déconnexion C.C de charge solaire étant configuré pour isoler électriquement le composant de déconnexion et disjonction C.C. durant une surcharge électrique ou un court-circuit, et
une unité de commande de charge C.C. (313) connectée au commutateur de déconnexion C.C de charge solaire (304), l'unité de commande de charge C.C. étant configurée pour réguler l'énergie électrique générée par le panneau solaire à envoyer au bloc batterie.

5. Système de charge mobile selon la revendication 1, dans lequel la pluralité de modules de charge comporte un module de charge C.C. configuré pour fournir une énergie électrique C.C. au bloc batterie pour charger le bloc batterie, le module de charge C.C. comportant :
une première source d'alimentation C.C. (321) pour fournir une énergie électrique au bloc batterie ;
une seconde source d'alimentation C.C. (322) pour fournir une énergie électrique au bloc batterie ; et
un sélecteur de source C.C. (324) configuré pour gérer et commander l'énergie électrique obtenue à partir de la première source d'alimentation C.C. et de la seconde source d'alimentation C.C. et envoyée au bloc batterie.

6. Système de charge mobile selon la revendication 5, dans lequel la première source d'alimentation C.C. (321) est un alternateur de tracteur et/ou une batterie de tracteur et/ou une batterie de tracteur auxiliaire,
dans lequel le module de charge C.C. comporte en outre un alternateur de source C.C.,
dans lequel la seconde source d'alimentation C.C. est un moteur d'unité de réfrigération de transport et/ou un moteur de tracteur, et
dans lequel l'alternateur de source C.C est configuré pour convertir une énergie mécanique provenant de la seconde source d'alimentation C.C. en une énergie électrique pour le bloc batterie.

7. Système de charge mobile selon la revendication 1, le système de charge mobile (200) étant connecté simultanément à une pluralité d'unités de stockage à régulation climatique autonome alimentées électriquement et l'unité de commande de système étant configurée pour commander le bloc batterie afin de fournir une énergie électrique à chaque unité de la pluralité d'unités de stockage à régulation climatique autonome alimentées électriquement.

8. Procédé de prolongement du fonctionnement autonome d'une unité de stockage à régulation climatique autonome alimentée électriquement (250), le procédé comprenant :
la charge par un ou plusieurs modules d'une pluralité de modules de charge (210) d'un système de charge mobile (200) d'un bloc batterie (205) du système de charge mobile ;
la connexion du système de charge mobile à une unité de stockage à régulation climatique autonome alimentée électriquement (250);
la charge par le système de charge mobile de l'unité de stockage à régulation climatique autonome alimentée électriquement à l'aide d'une énergie électrique stockée dans le bloc batterie ;
la surveillance et la commande par une unité de commande de système (201) du système de charge mobile de la charge de l'unité de stockage à régulation climatique autonome alimentée électriquement par le bloc batterie ;
la connexion d'un module de charge d'onduleur C.A. (316) du système de charge mobile à une source d'alimentation aux quais (240) ;
la réception par le module de charge d'onduleur C.A. d'une énergie électrique d'alimentation aux quais à partir de la source d'alimentation aux quais ;
la gestion et la commande par le module de charge d'onduleur C.A. de l'énergie électrique d'alimentation aux quais en une énergie électrique compatible pour le bloc batterie et/ou l'unité de stockage à régulation climatique autonome alimentée électriquement ; et
la délivrance de l'énergie électrique au bloc batterie et/ou à l'unité de stockage à régulation climatique autonome alimentée électriquement.

9. Procédé selon la revendication 8, comprenant en outre :
le passage de l'énergie électrique stockée dans le bloc batterie (205) à travers un module de charge d'onduleur C.A. du système de charge mobile ;
la conversion par le module de charge d'onduleur C.A. (316) de l'énergie électrique en une énergie électrique C.A. compatible avec une entrée de charge C.A. de l'unité de stockage à régulation climatique autonome alimentée électriquement; et
le passage de l'énergie électrique C.A. à l'entrée de charge C.A..

10. Procédé selon la revendication 8, dans lequel un module de la pluralité de modules de charge est un module de charge solaire (210), le module de charge solaire :
absorbant l'énergie solaire ;
convertissant l'énergie solaire en énergie électrique ; et
fournissant l'énergie électrique au bloc batterie pour charger le bloc batterie.

11. Procédé selon la revendication 8, dans lequel un module de la pluralité de modules de charge est un module de charge C.C. et le procédé comportant en outre :
la délivrance par une première source d'alimentation C.C. (321) d'une énergie électrique à un sélecteur de source C.C. du module de charge C.C. ;
la délivrance par une seconde source d'alimentation C.C. (322) d'une énergie électrique au sélecteur de source C.C. ;
le passage par le sélecteur de source C.C. (324) de l'énergie électrique provenant de la première source d'alimentation C.C. et/ou de la seconde source d'alimentation C.C. au bloc batterie,
dans lequel la première source d'alimentation C.C. est un alternateur de tracteur et/ou une batterie de tracteur et/ou une batterie de tracteur auxiliaire,
dans lequel la seconde source d'alimentation C.C. est une unité de réfrigération de transport et/ou un moteur de tracteur, et
dans lequel un alternateur de source C.C. du module de charge C.C. convertit une énergie mécanique provenant de la seconde source d'alimentation C.C. en énergie électrique.

12. Procédé selon la revendication 8, dans lequel la charge par le système de charge mobile (200) de l'unité de stockage à régulation climatique autonome alimentée électriquement comporte la charge de l'unité de stockage à régulation climatique autonome alimentée électriquement durant le transport de l'unité de stockage à régulation climatique autonome alimentée électriquement.

13. Procédé selon la revendication 8, comprenant en outre :
la connexion simultanée du système de charge mobile (200) à une seconde unité de stockage à régulation climatique autonome alimentée électriquement ;
la charge par le système de charge mobile de la seconde unité de stockage à régulation climatique autonome alimentée électriquement à l'aide de l'énergie électrique stockée dans le bloc batterie; et
la surveillance et la commande par l'unité de commande de système (201) du système de charge mobile de la charge de l'unité de stockage à régulation climatique autonome alimentée électriquement et de la seconde unité de stockage à régulation climatique autonome alimentée électriquement par le bloc batterie.
